Europäisches Patentamt

European Patent Office

Office européen des brevets

(19)

(11) Publication number: **0 007 242**
**B1**

# EUROPEAN PATENT SPECIFICATION

(45) Date of publication of patent specification: **29.02.84**

(51) Int. Cl.³: **G 03 B 31/04**

(21) Application number: **79301406.9**

(22) Date of filing: **16.07.79**

(54) **Apparatus for obtaining synchronous sound filming.**

(30) Priority: **18.07.78 AU 5123/78**

(43) Date of publication of application:
**23.01.80 Bulletin 80/2**

(45) Publication of the grant of the patent:
**29.02.84 Bulletin 84/9**

(84) Designated Contracting States:
**CH DE FR GB IT SE**

(56) References cited:
**DE - A - 1 933 522**
**DE - A - 2 245 179**
**DE - A - 2 348 219**
**DE - B - 1 809 243**
**DE - B - 2 151 103**

(73) Proprietor: **Walters, Eric Richard**
**20 Battle Boulevard**
**Seaforth, New South Wales 2092 (AU)**

(72) Inventor: **Walters, Eric Richard**
**20 Battle Boulevard**
**Seaforth, New South Wales 2092 (AU)**

(74) Representative: **MacGregor, Gordon et al,**
**ERIC POTTER & CLARKSON 14 Oxford Street**
**Nottingham, NG1 5BP (GB)**

Courier Press, Leamington Spa, England.

## Apparatus for obtaining synchronous sound filming

This invention relates to systems and means for effecting synchronism between the picture film and the sound tape in cinematography.

When magnetic sound recording equipment was first used in motion picture production, the recording was made directly onto sprocketed recording tape, identical in size to the film used in the camera, so that one frame of sound equalled one frame of picture. The recorder and camera were driven by identical motors, powered by the same AC power supply, to maintain identical speeds during filming. However, as the recorder was considerably slower in reaching operating speed than the camera, it was necessary to start the recorder first. The operator would call "speed" when operating speed was reached, the camera would then be started and a clapper-board (or slate) was then struck before the scene was filmed. This "slate" provided a visual and aural reference point for later synchronisation of the film with the tape (for screening, editing, etc.). All editing stages were (and still are) carried out on magnetic sprocketed tape, with the Optical Sound Track being struck only on the final prints.

As the state of the art progressed and more portable cine cameras evolved, the sprocketed tape recorders became too cumbersome for location filming. In their place, standard $\frac{1}{4}$ inch (0.0063 m) tape recorders were utilized, with the addition of a "pilot-track" to record the exact speed at which the tape passed the recording head. This pilot track contains an intermittent pulse which acts as "electronic sprocket holes". The pulse can be supplied either by a synch-pulse generator attached to the camera or, of late, by a crystal oscillator contained within the recorder. The former method "slaves" the recorder to the actual speed of the camera (as transmitted by the synch-pulse-generator) while the latter requires that both the camera and recorder speeds are controlled by crystal oscillators which are very accurate speed-control devices.

Once recorded, the tape is played back, through an electronic synchroniser, which "reads" the pulse and governs the playback speed of the recorder to exactly match the speed at which the tape was recorded. The sound is thus transferred to the sprocketed tape, as used in the earlier system, so that one frame of sound equals one frame of picture. Although the field equipment has been vastly improved, the traditional operating systems have been retained. The recorder is still started first, the operator advises "speed", the camera is started and a clapper-board (slate) is struck before the scene progresses. As more sound tape is recorded than film exposed it is necessary, under this system, to slate each take to provide the editor with a reference point for synchronization of each take. "Synching the rushes" thus becomes a tedious and time-consuming task, with each sound-take necessarily being trimmed to match the length of the film-take. In documentary production, where each roll of film can contain anything up to eighty or ninety takes, a great deal of time is expended on this task, before the film can be screened, with accompanying sound.

Some proposals which avoid the traditional slate during location shooting have been made; notably

(a) The Automatic Slate: which consists of a light behind the camera lens and an oscillator in the recorder, to provide several frames of "fogged" film to synchronise with several frames of high pitched tone on the tape.

(b) The Synch Torch: a high-powered light which is connected to the oscillator in the recorder. The sound recordist aims the light at the lens of the camera, switching it on and off, to provide a visual and aural slate.

Neither system, however, assist the editor to any extent in his task of "synching the rushes" and a considerable amount of film and tape is wasted in simply recording the slate.

DE—B—1809243 describes apparatus which operates to provide on a cinematographic film sound initiation marks and to provide on a sound tape sound termination marks. During playback, the film is run continuously, but the tape is repeatedly stopped and restarted each time a new visual scene is projected, so that synchronisation is achieved between the sound and the film scenes. The control circuitry is incorporated as a part of the camera.

The present invention provides apparatus for recording on cinematographic film and magnetic sound tape (11) visual and aural impressions of a plurality of scenes, comprising a camera (7) with a manual control (9) for repeated advancement for successive ones of said scenes of film for exposure thereof, and a magnetic tape recorder (8) for recording on the tape said aural impressions and including a tape advancement control (15) for initiating advancement of the tape, and wherein there is a time differential between the running times of said camera and of said recorder relative to an interval during which both are activated, with the running time of said tape recorder being longer, control means (4) responding to actuation of the manual control of the camera to actuate the tape advancement control and including time delay means to delay actuation of the tape advancement control behind commencement of advancement of the film, characterised in that the control means is defined by an accessory device (4) which is a separate unit from the tape recorder and the camera and is coupled to the camera (7) only at the manual control (9) and to the tape recorder (8) only at the tape advancement control (15), the accessory device being responsive only to actuation of the manual control (9) of the camera, said time delay means operating to delay actuation of the tape advancement control (15) by a predetermined time interval equal to said time differential, whereby, for each scene, the recording duration of the film and of the magnetic tape is substantially equal and whereby, over said plurality of scenes, there is a substantially equal time duration for the running time of the film and of the magnetic tape, the delay means including a time delay circuit (C1, R4 and R5) responsive to actuation of the manual control (9) for generating an adjustable delay signal having a duration equal to said predetermined time, and switch means (RLA) connected to receive said delay signal for sending power to the tape advancement control after the delay signal has terminated.

This enables conventional existing cameras and tape-recorders to be used by coupling to them the accessory device. The delay period is adjustable, which permits operation with different cameras and tape recorders, this delay period compensating for the time differential between the running times of the particular camera and tape-recorder.

A preferred embodiment will be described with reference to the accompanying drawings, in which:—

FIG. 1 shows explanatory diagrams;

FIG. 2 illustrates schematically an electronic automatic synchronising circuit according to the invention; and

FIG. 3 is a graphic representation of an operative layout.

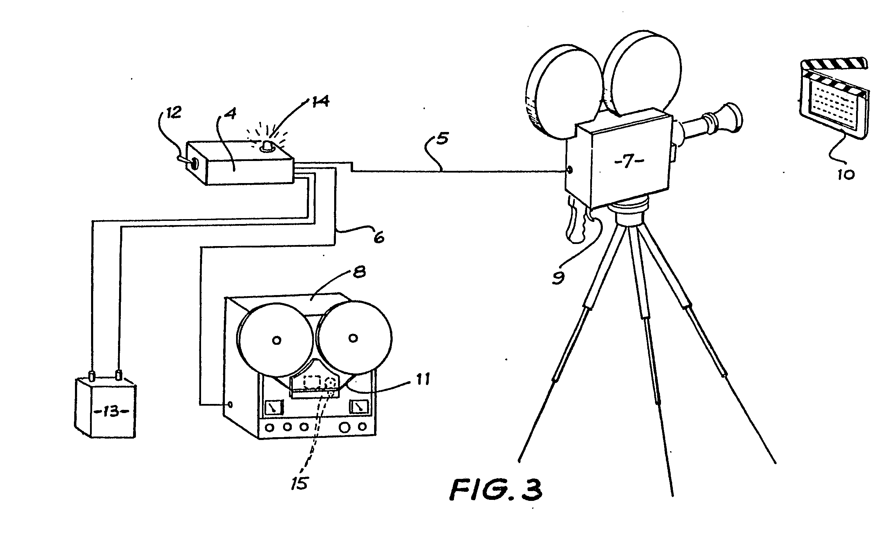

Quite briefly, with reference to FIG. 3, the synchronising means comprises an electronic device 4 which when connected (either by cables 5 and 6 or radio link) to both a camera 7 and a recorder 8, provides automatic start of the recorder 8 when a start switch 9 on the camera 7 is activated, while a time-delay circuit within the device 4 compensates for the differential between the run-up/run-down times of the recorder 8 and camera 7. The circuit of the device 4, when correctly adjusted to the equipment in use, maintains exact synchronisation of the length of film exposed by the camera 7 with the length of sound-tape 11 recorded in the recorder 8 and, subsequently, when transferred to sprocketed sound tape (i.e. 100 frames of film to 100 frames of sprocketed sound tape). This means that, in the screening/editing stages of production, once the head of the first film "take" is synchronized with the head of the first sound "take", all succeeding takes on those matching rolls will remain in synchronisation, regardless of the number of takes. A secondary electronic circuit within the device 4 causes a short "pip" to be superimposed on the recording when the camera switch 9 is de-activated, to provide a constant check on synchronisation during editing/screening.

Most professional motion picture sound recorders incorporate a "remote start" function, activated by a switch (not shown) connected to the recorder 8 by cable or radio link and this switch is now replaced by a relay, activated by switched power from the camera 7. This does achieve an effective means of starting the recorder 8 in synchronism with the camera 7 but, because of the conventional heavy capstan 15 in the recorder 8, there is an inertia to be overcome with starting of the recorder 8 and an over-run of the recorder 8 at the end of each take. As there is little inertia in the camera 7 and only six frames of over-run, after the switch 9 is released, the cumulative effect is that each sound take is approximately ten frames longer than the film take, i.e. after transfer of the sound to sprocketed tape. The present invention is based upon the innovation of delaying the start of the recorder 8 by the equivalent of ten, or other predetermined number of, frames. It should be noted that the amount of delay is governed by the types of equipment used, their age and condition, etc., and hence a variable delay has been incorporated. For the sake of this description, however, a delay of ten frames is used as a benchmark. By delaying each start of the recorder 8 by the equivalent of ten frames, while not affecting the "stop" thereof, it is possible to compensate for the inertia and over-run of the recorder 8. To achieve this, a "delayed start/instant stop" circuit has been employed.

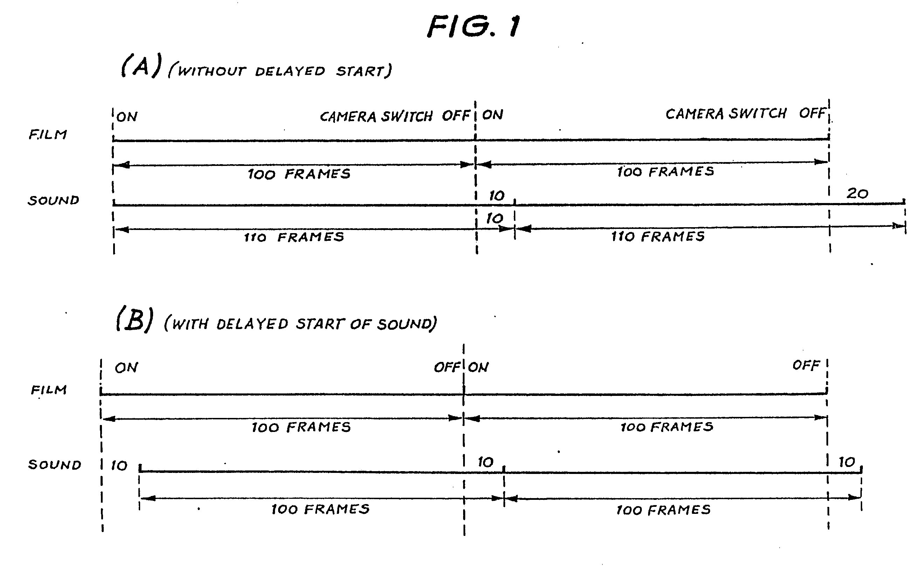

The diagrams of FIG. 1 explain the system in simplified form. Diagram (A) shows the conditions without delayed start of the recorder 8 where ten frames more sound is recorded than film exposed, on each take. Therefore, after take 2, there is 20 frames more sound; after take 3, 30 frames more sound; and so on with the differential between film and tape length growing by 10 frames each take. Diagram (B) shows the conditions with delayed start of sound recording by recorder 8 where the sound does not start until 10 frames of film have been exposed by camera 7, but finishes as in diagram A, without any added delay. This effectively takes 10 frames off the length of sound recorded by recorder 8 (from the start of each take), resulting in the same length in frames of both recorded sound and exposed film. On take 2, and subsequent takes, the delay equals the amount of over-run from the previous take. It should be noted that, in film production, the first 10 frames, or even 40 frames, of film are often of little use and are frequently not used in a finished production. Furthermore, the run-up to "speed" of sound recorders is now quite short, being only approximately 3 or 4 frames and occupying a portion of a second, and this overlap of sound between takes is almost unnoticeable in the finished production even when the early film frames are not cut. However, where editing requires deletion of early frames of any film take this can be very readily cut from the same positions of both film and tape without the present tedious requirement of "synching the rushes".

With the use of the presently proposed device 4, provided an initial "Master Slate" is recorded on both film and tape using the traditional clapp-board 10 (see FIG. 3), there is no further need to "slate" takes, as long as the Auto-Synch is engaged. Once the $\frac{1}{4}$-inch sound tape 11 has been transferred to sprocketed tape, the editor simply synchronises the Master Slate, on film and sound tape, and synchronisation is maintained on all subsequent takes. Provision has been made for the sound recordist to disengage the Auto-Synch, by means of a switch 12, so that he may record "wild sound", independently of the camera 7, as he wishes. To regain automatic synchronisation, it is simply necessary to record another "Master Slate" once the Auto-Synch is re-engaged. The editor then "lifts-out" the "wild sound", rejoins the tape and synchronisation is regained.

As mentioned earlier, a "tail slate", consisting of a short "pip" on the tape 11, denotes the point at which the camera stops, to provide the editor with a ready reference regarding synchronisation. This has been provided as an aid to exact adjustment of the device 4 to suit the equipment employed and, once adjusted, acts as a ready reference for the editor in case of accidental damage to the device 4, human error in its operation, etc. If synchronisation is "lost" during a take, the editor can regain "synch" on the succeeding take by aligning the pip with the camera stop, i.e. the last frame picture on a take.

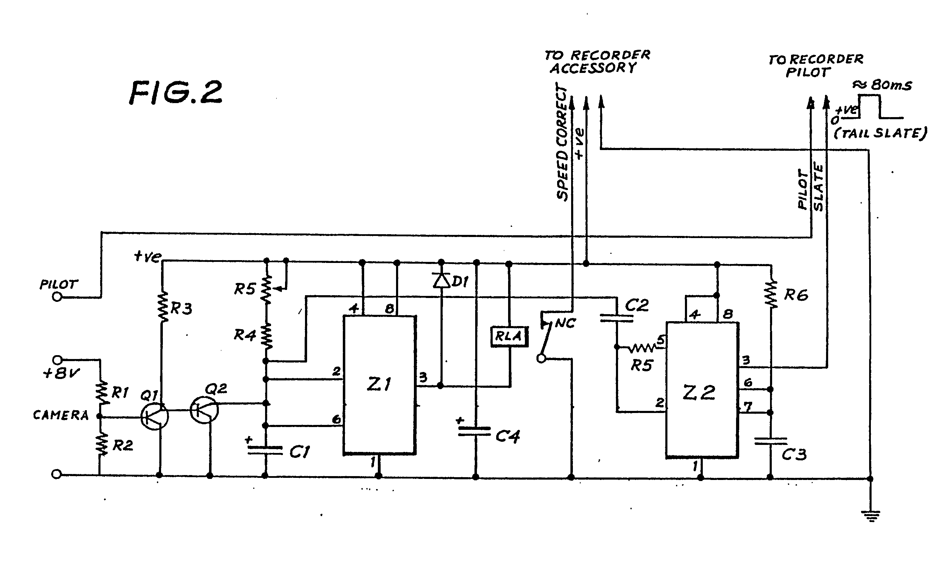

With reference to the circuitry of the device 4 as shown by FIG. 2, when the camera start switch 9 (FIG. 3) is activated, voltage is applied to the base of transistor Q1, via resistor R1. Resistor R2 provides a path for leakage current in transistor Q1.

When transistor Q1 is biased ON, transistor Q2 is biased OFF, allowing voltage on capacitor C1 to rise with time constant C1 + (R4 + R5). Integrated circuit Z1 senses the voltage across capacitor C1 such that, when that voltage is less than

$$\frac{\text{supply voltage Vs}}{3},$$

the output on pin 3 is forced high. When the voltage on capacitor C1 rises to

$$\frac{2Vs}{3},$$

the output is forced low, energising the relay RLA. When the camera start switch 9 is de-activated, transistor Q1 is turned OFF, turning ON transistor Q2 via resistor R3 and forcing voltage on capacitor C1 quickly to zero, thus forcing the output of circuit Z1 high and de-energising relay RLA.

The rapid fall of voltage on capacitor C1 is passed to the input of integrated circuit Z2, via capacitor C2. Capacitor C2 and resistor R5 differentiate the waveform to produce a negative-going pulse on pin 2 of circuit Z2, setting its output high. This releases the discharge circuit in circuit Z2 (pin 7), allowing the voltage on capacitor C3 to rise with time constant C3 + R6. When this voltage reaches 2/3 Vs, the output is forced low and the discharge energised, discharging capacitor C3 and re-setting the circuit. The result is a positive pulse on pin 3 of circuit Z2, starting coincident with the stopping of the camera. Diode D1 prevents inductive back e.m.f. from damaging circuit Z1 while capacitor C4 provides low impedance to fast transients due to switching in circuits Z1 and Z2.

In the circuit shown, power is applied to the electronic circuit of the device 4 from the recorder. In practice, this power can be provided from any source, including the recorder 8, camera 7 or independent batteries 13 as shown by FIG. 3.

In many instances radio connection between the electronic device 4 (FIG. 3) and the camera 7 will be desired and it will be preferred to incorporate the device 4 within the casing of the recorder 8. Coding of the radio link will be necessary for channel security and a 170 m sec delay could be inherent therein, while a delay of 320 m sec overall is necessary for operation of the invention. There will be a need, therefore, for automatic introduction of an additional delay to compensate in the absence of the 170 m sec response when the connection is switched to physical cable where no delay in response occurs.

The auto-synch switch 12 is coupled to a pilot globe 14 and when off disconnects power from the circuit of FIG. 2 and opens the earth connection through the normally closed contacts of relay RLA which are connected with the remote control jack of the recorder 8.

**Claims**

1. Apparatus for recording on cinematographic film and magnetic sound tape (11) visual and aural impressions of a plurality of scenes, comprising a camera (7) with a manual control (9) for repeated advancement for successive ones of said scenes of film for exposure thereof, and a magnetic tape recorder (8) for recording on the tape said aural impressions and including a tape advancement control (15) for initiating advancement of the tape, and wherein there is a time differential between the running time of said camera and of said recorder relative to an interval during which both are activated, with the running time of said tape recorder being longer, control means (4) responding to actuation of the manual control of the camera to actuate the tape advancement control and including time delay means to delay actuation of the tape advancement control behind commencement of advancement of the film, characterised in that the control means is defined by an accessory device (4) which is a separate unit from the tape recorder and the camera and is coupled to the camera (7) only at the manual control (9) and to the tape recorder (8) only at the tape advancement control (15), the accessory device being responsive only to actuation of the manual control (9) of the camera, said time delay means operating to delay actuation of the tape advancement control (15) by a predetermined time interval equal to said time differential, whereby, for each scene, the recording duration of the film and of the magnetic tape is substantially equal and whereby, over said plurality of scenes, there is a substantially equal time duration for the running time of the film and of the magnetic tape, the delay means including a time delay circuit (C1, R4 and R5) responsive to actuation of the manual control (9) for generating an adjustable delay signal having a duration equal to said predetermined time, and switch means (RLA) connected to receive said delay signal for sending power to the tape advancement control after the delay signal has terminated.

2. Apparatus as claimed in Claim 1, wherein the time delay circuit includes means (Q2) for deactivating operation of the tape advancement control (15) immediately upon deactivation of the manual control (9) of the camera.

3. Apparatus as claimed in Claim 1 or 2, wherein the accessory device (4) is accommodated within the casing of the tape recorder.

4. Apparatus as claimed in Claim 3, wherein response to the manual control of the camera is via radio link.

5. Apparatus as claimed in Claim 1 or 2, wherein the accessory device (4) is accommodated within the casing of the camera.

6. Apparatus as claimed in any one of the preceding claims, wherein the accessory device (4) further comprises a manual master switch (12) for selecting whether the device is operatively connected with the tape recorder or disconnected therefrom.

7. Apparatus as claimed in any one of the preceding Claims, wherein the taper advancement control (15) is activated through the charging time of a capacitor (C1) of the delay circuit (C1, R4 and R5), and deactivated by instantaneous discharge of the capacitor.

8. Apparatus as claimed in Claim 7, wherein the tape advancement control (15) is operable by a relay (RLA) operated in response to the charge stored in the capacitor above a threshold voltage.

9. Apparatus as claimed in any one of the preceding Claims, wherein the accessory device further comprises pulse generating means (C2), coupled to the time delay circuit, for generating a pulse upon the deactivation of the manual control and for directing the pulse to the tape recorder, thereby providing an aural sound on the tape synchronous with the end of each of said scenes.

**Revendications**

1. Appareil pour enregistrer sur film cinématographique et sur bande-son magnétique (11) des impressions visuelles et auditives d'une multiplicité de scènes, comprenant une caméra (7) munie d'une commande manuelle (9) pour faire avancer de façon répétée le film à exposer pour lesdites scènes en succession, et un enregistreur à bande magnétique (8) pour enregistrer sur la bande lesdites impressions auditives, et comprenant une commande d'avance de bande (15) pour déclencher l'avance de la bande, et dans lequel une différence de temps existe entre le temps de marche de ladite caméra et celui dudit enregistreur relativement à un intervalle pendant lequel ils sont tous deux en fonctionnement, le temps de marche dudit enregistreur à bande étant plus long, des moyens de commande (4) répondant à la manoeuvre de la commande manuelle de la caméra pour manoeuvrer la commande d'avance de la bande et comprenant des moyens de retard pour retarder la manoeuvre de la commande d'avance de la bande après le commencement de l'avance du film, caractérisé en ce que les moyens de commande sont définis par un dispositif accessoire (4) qui est une unité séparée de l'enregistreur à bande et de la caméra et est couplé à la caméra (7) seulement par la commande manuelle (9) et à l'enregistreur à bande (8) seulement par la commande d'avance de bande (15), le dispositif accessoire étant sensible seulement à la manoeuvre de la commande manuelle (9) de la caméra, lesdits moyens de retard ayant pour fonction de retarder la manoeuvre de la commande d'avance de bande (15) d'un intervalle de temps prédéterminé égal à ladite différence de temps, la durée d'enregistrement du film et de la bande magnétique étant pratiquement égale pour chaque scène et la durée de marche du film et de la bande magnétique étant pratiquement égale sur ladite multiplicité de scènes, les moyens de retard comprenant un circuit de retard (C1, R4 et R5) sensible à la manoeuvre de la commande manuelle (9) pour engendrer un signal de retard réglable ayant une durée égale audit temps prédéterminé, et des moyens de commutation (RLA) reliés de façon à recevoir ledit signal de retard pour alimenter la commande d'avance de bande après la fin du signal de retard.

2. Appareil selon la revendication 1, dans lequel le circuit de retard comprend des moyens (Q2) pour mettre hors de fonctionnement la commande d'avance de bande (15) immédiatement lors de la désactivation de la commande manuelle (9) de la caméra.

3. Appareil selon la revendication 1 ou 2, dans lequel le dispositif accessoire (4) est logé dans le boîtier de l'enregistréur à bande.

4. Appareil selon la revendication 3, dans lequel la réponse à la commande manuelle de la caméra se fait par liaison radio.

5. Appareil selon la revendication 1 ou 2, dans lequel le dispositif accessoire (4) est logé dans le boîtier de la caméra.

6. Appareil selon l'une quelconque des revendications précédentes, dans lequel le dispositif accessoire (4) comprend en outre un commutateur pilote (12) pour effectuer sélectivement la liaison fonctionnelle du dispositif à l'enregistreur à bande ou sa séparation d'avec lui.

7. Appareil selon l'une quelconque des revendications précédentes, dans lequel la commande d'avance de bande (15) est activée par le temps de charge d'un condensateur (C1) du circuit de retard (C1, R4 et R5), et désactivé par décharge instantanée du condensateur.

8. Appareil selon la revendication 7, dans lequel la commande d'avance de bande (15) peut être actionée par un relais (RLA) actionné en réponse à la charge accumulée dans le condensateur au-dessus d'une tension de seuil.

9. Appareil selon l'une quelconque des revendications précédentes, dans lequel le dispositif accessoire comprend en outre des moyens générateurs d'impulsions (C2), couplés au circuit de retard, pour engendrer une impulsion lors de la désactivation de la commande manuelle et pour diriger l'impulsion sur l'enregistreur à bande, fournissant ainsi un son auditif sur la bande synchrone avec la fin de chacune desdites scènes.

## Patentansprüche

1. Vorrichtung zum Aufzeichnen von Sicht- und Höreindrücken einer Anzahl von Szenen auf kinematographischem Film bzw. Magnettonband (11), umfassend eine Kamera (7) mit Handsteuerung (9) für wiederholten Transport aufeinanderfolgender Filmszenen zur Belichtung derselben und ein Magnetbandaufzeichnungsgerät (8) um auf dem Magnettonband die Höreindrücke aufzuzeichen, mit einer Bandtransportsteuerung (15) zur Einleitung des Bandtransports, wobei ein Zeitunterschied zwischen der Laufzeit der Kamera und derjenigen des Aufzeichnungsgeräts relativ zu einem Intervall, in welchem beide aktiviert sind, besteht und die Laufzeit des Bandaufzeichnungsgeräts länger ist, mit einer auf die Betätigung der Handsteuerung der Kamera ansprechenden Steuereinrichtung (4) zur Betätigung der Bandtransportsteuerung und mit einer Zeitverzögerungseinrichtung zur Verzögerung der Betätigung der Bandtransportsteuerung nach Beginn des Filmtransports, dadurch gekennzeichnet, daß die Steuereinrichtung durch eine Zusatzvorrichtung (4) gebildet ist, die eine vom Bandaufzeichnungsgerät und von der Kamera getrennte Einheit bildet und mit der Kamera (7) nur an der Handsteuerung (9) und mit dem Bandaufzeichnungsgerät (8) nur an der Bandtransportsteuerung (15) gekoppelt ist, daß die Zusatzvorrichtung nur auf die Betätigung der Handsteuerung (9) der Kamera anspricht, daß die Zeitverzögerungseinrichtung die Betätigung der Bandtransportsteuerung (15) um eine vorbestimmte Zeitspanne entsprechend dem Zeitunterschied verzögert, so daß die Aufzeichnungsdauer auf dem Film und auf dem Magnetband für jede Szene im wesentlichen gleich ist und so daß über die Anzahl der Szenen hinweg eine praktisch gleiche Zeitdauer für die Laufzeit des Films und des Magnetbands vorliegt, daß die Zeitverzögerungseinrichtung eine auf die Betätigung der Handsteuerung (9) ansprechende Zeitverzögerungsschaltung (C1, R4 und R5) zur Erzeugung eines einstellbaren Verzögerungssignals mit einer Dauer entsprechend der vorbestimmten Zeit aufweist und daß eine Schaltereinrichtung (RLA) zur Abnahme des Verzögerungssignals geschaltet ist, um die Bandtransportsteuerung nach dem Ende des Verzögerungssignals mit Strom zu beschicken.

2. Vorrichtung nach Anspruch 1, dadurch gekennzeichnet, daß die Zeitverzögerungsschaltung Mittel (Q2) zum Deaktivieren des Betriebs der Bandtransportsteuerung (15) unmittelbar auf die Deaktivierung der Handsteuerung (9) der Kamera aufweist.

3. Vorrichtung nach Anspruch 1 oder 2, dadurch gekennzeichnet, daß die Zusatzvorrichtung (4) im Gehäuse des Bandaufzeichnungsgeräts untergebracht ist.

4. Vorrichtung nach Anspruch 3, dadurch gekennzeichnet, daß das Ansprechen auf die Handsteuerung der Kamera über einen Funkübertragungsweg erfolgt.

5. Vorrichtung nach Anspruch 1 oder 2, dadurch gekennzeichnet, daß die Zusatzvorrichtung (4) im Gehäuse der Kamera untergebracht ist.

6. Vorrichtung nach einem der vorangehenden Ansprüche, dadurch gekennzeichnet, daß die Zusatzvorrichtung (4) weiterhin einen Hand-Hauptschalter (12) zum Wählen eines betrieblichen Verbindungs- oder Trennzustands gegenüber dem Bandaufzeichnungsgerät aufweist.

7. Vorrichtung nach einem der vorangehenden Ansprüche, dadurch gekennzeichnet, daß die Bandtransportsteuerung (15) über die Aufladezeit eines Kondensators (C1) der Verzögerungsschaltung (C1, R4 und R5) aktivierbar und durch spontane Entladung des Kondensators deaktivierbar ist.

8. Vorrichtung nach Anspruch 7, dadurch gekennzeichnet, daß die Bandtransportsteuerung (15) durch ein Relais (RLA) betätigbar ist, das in Abhängigkeit von der im Kondensator gespeicherten, über einer Schwellenwertspannung liegenden Ladung aktivierbar ist.

9. Vorrichtung nach einem der vorangehenden Ansprüche, dadurch gekennzeichnet, daß die Zusatzvorrichtung weiterhin eine mit der Zeitverzögerungsschaltung gekoppelte Impulserzeugungseinrichtung (C2) zur Erzeugung eines Impulses bei Deaktivierung der Handsteuerung und zur Lieferung des Impulses zum Bandaufzeichnungsgerät aufweist, um damit synchron mit dem Ende jeder der genannten Szenen einen hörbaren Ton auf dem Magnetband zu erzeugen.

# FIG. 1

## (A) (WITHOUT DELAYED START)

**FILM**    ON      CAMERA SWITCH OFF | ON      CAMERA SWITCH OFF

← 100 FRAMES → | ← 100 FRAMES →

**SOUND**    10     20

10

← 110 FRAMES → | ← 110 FRAMES →

## (B) (WITH DELAYED START OF SOUND)

**FILM**    ON      OFF | ON      OFF

← 100 FRAMES → | ← 100 FRAMES →

**SOUND**   10      10      10

← 100 FRAMES → | ← 100 FRAMES →

0 007 242

FIG.2

FIG.3

0 007 242